# EUROPÄISCHE PATENTSCHRIFT

(11) **EP 2 910 699 B1**
(45) Veröffentlichungstag und Bekanntmachung des Hinweises auf die Patenterteilung: **11.05.2016**
(21) Anmeldenummer: 15153276.9
(22) Anmeldetag: 26.02.2011
(51) Int. Cl.: E04B 2/74, E04C 2/38, E04B 1/61, E04F 19/06, E04B 2/78

(54) **Kantenprofilelementanordnung**
Edge profile element assembly
Assemblage d'élément de profilé de bord

(30) Priorität: 07.05.2010 DE 202010006529 U
(43) Veröffentlichungstag der Anmeldung: 26.08.2015
(62) Teilanmeldung aus: 11001599.7
(73) Patentinhaber: Hestex Systems B.V., 7332 BE Apeldoorn (NL)
(72) Erfinder: Sint Nicolaas, Arie, 7301 BC Apeldoorn (NL)
(74) Vertreter: Stenger Watzke Ring

(56) Entgegenhaltungen:
- DE-U1-202005 003 268
- US-A- 6 141 926

## Beschreibung

Die vorliegende Erfindung betrifft eine Kantenprofilelementanordnung für Wandbauplatten, ein Wandbauplattenelement, ein Wandbausystem sowie eine Verwendung eines Kantenprofilelements.

Aus der DE 29 48 971 A1 sind als Wandbauplatten dienende Flächenkonstruktionselemente bekannt, welche zum Aufbau mittels einer Verbindungsvorrichtung verbunden werden und durch eine Verdrehbewegung gegenüber einem Pfosten in diesen eingeführt werden können. Das Resultat ist eine schwenkbeweglich an einem Pfosten angeordnete Wandbauplatte, welche beispielsweise als Doppeltür oder abschließbares Schaufenster verwendet werden kann. Gemäß der Lehre der DE 29 48 971 A1 soll ein Flächenkonstruktionselement nur durch zwei der dort vorgeschlagenen Verbindungsvorrichtungen seitlich gehalten werden. Auf die Verwendung von horizontalen Zargen soll ganz bewusst verzichtet werden. Die Winkelstellung des Flächenkonstruktionselements gegenüber dem Pfosten wird mit Hilfe einer von der Verbindungsvorrichtung unabhängigen Verschlusseirichtung fixiert.

Aus der GB 1 436 412 ist ein System für die stationäre Errichtung von Trockenbauwänden bekannt. Wandbauplatten werden mit Hilfe von Anschlussstücken gegenüber Pfostenelementen zu verklemmen. Das Anschlussstück weist zu diesem Zweck eine Nase auf, welche in einen im Pfosten gebildeten Einschubkanal eingeführt werden kann. Die Anschlussstücke erstrecken sich nur über einen Bruchteil der Kantenlänge der Wandbauplatten.

Systeme für den Aufbau von Wänden, insbesondere den mobilen Aufbau, sind insbesondere für den Bereich Messebau bekannt, Stand der Technik und umfangreichem Einsatz. Solche Systeme für Regelsysteme, Messeaufbauten und dergleichen verwenden üblicherweise Klemmverbindersysteme. Zwischen Rahmenteilen wie Pfosten, Regalbrettern und ähnlichen Verbindungsstrukturen werden lösbare Verbinder eingesetzt. So lässt sich eine Schnellverbindetechnik realisieren, so dass ein belastbarer Aufbau erreicht werden kann. Um eine hohe Mobilität erreichen zu können, sind ein schneller Auf- und Abbau angestrebt. Beispielsweise wird ein gattungsgemäßes System in der EP 1 234 985 B1 offenbart, dort Klemmverbindersystem genannt. Eine Ankereinheit der Verbindungsvorrichtung ist klauenförmig ausgebildet. Sie weist bewegbare Ankerelemente auf, die mit Streben eines Gegenelementes wie einem Pfosten oder dergleichen verbindbar sind. Hierzu werden die Ankerelemente in eine Öffnung des Pfostens eingeführt. Das Festlegen erfolgt dadurch, dass an den Enden der Ankerelemente ausgebildete Klauen den Rand einer Nut oder Öffnung hintergreifen und auf diese Weise die Verbindungsvorrichtung am Pfosten festlegen. Der Antrieb besteht aus einem Getriebe, meistens exzenterbetätigt.

Vergleichbare Systeme sind gezeigt und beschrieben in der WO 2009/000390 A1 und dergleichen. Es lassen sich mit derartigen Verbindern unter zugehörigen Profilsystemen, beispielsweise auch beschrieben in EP 0 412 339 A2, beispielsweise Messestände kreieren.

Im Stand der Technik ist es bekannt, dass aus Pfosten und Riegeln, meistens gebildet aus völlig gleichartigen Strangelementen mit Hohlprofilbereichen und hinterschnittenen Nutbereichen, Wände aufgebaut werden. Dies erfolgt dadurch, dass beispielsweise ein Pfosten in seinen Endbereichen mit den Stirnkanten eines Riegels über entsprechende Klemmverbinder verbunden wird. Auf diese Weise entsteht eine Art Rahmen, der offene hinterschnittene Nuten an der Innenwandung zeigt. In diese Nuten lässt sich ohne weiteres ein Ausfachelement, beispielsweise eine Pressspanplatte, eine Glasplatte oder dergleichen einschieben. Es verbleibt jedoch mindestens eine freie Kante, auf die dann beispielsweise wiederum ein Pfosten bzw. ein Riegel aufgesetzt werden muss, der dann mit den angrenzenden Pfosten-/Riegelelementen verbunden werden muss.

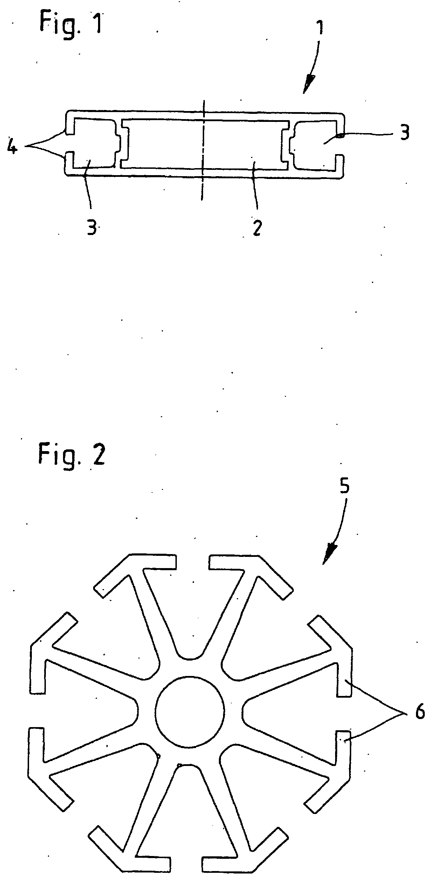

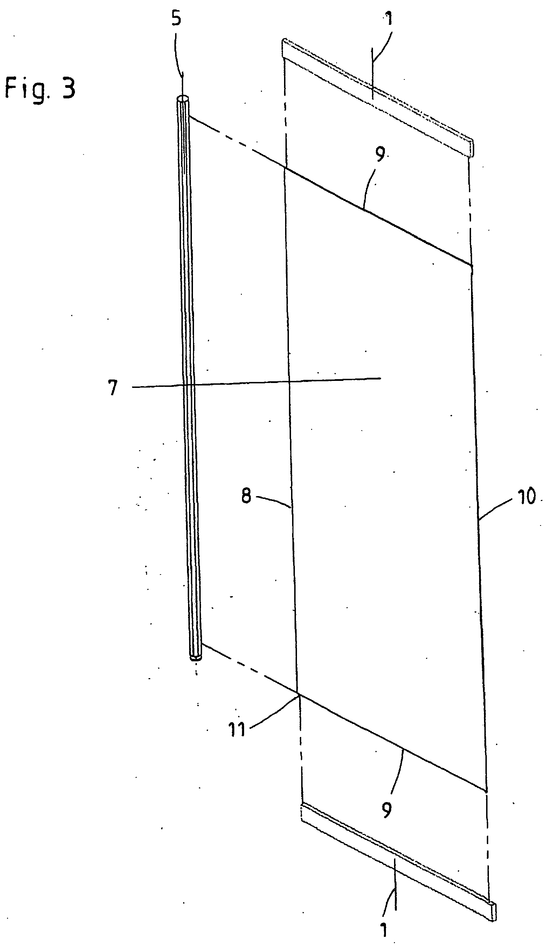

Als Beispiel für entsprechende Strangprofile sind die Figuren 1 und 2 beigelegt. Eine Zusammenbaumöglichkeit ergibt sich aus der Figur 3. Die Figuren 1 bis 3 zeigen alle den Stand der Technik.

Fig. 1 zeigt den Querschnitt eines Rechteckprofils 1, welches in der Mitte eine rechteckige Hohlkammer 2 und an beiden Seiten davon Nutebereiche 3 aufweist. Die Nuten 3 sind teilgeschlossen, und zwar durch die Schenkel 4, so dass sich eine hinterschnittene Nut ergibt, hinter die die pilzartigen Köpfe von Klemmverbindern eingreifen können. Dabei gibt es entweder sogenannte Hammerkopfverbinder, die in eine Einsetzposition in die Nut 3 eingeschoben und dann durch querdrehen hinter die Schenkel 4 gebracht werden, und es gibt sogenannte Klemmverbinder, bei welchen zwei Federelemente die Schenkel 4 hintergreifend in die Nut 3 eingesetzt sind. In beiden Fällen werden die Elemente beispielsweise durch Drehen eines Exzenters angezogen. Dabei bewegen sie sich relativ zu einem nicht gezeigten Körper, der wiederum in einer Hohlkammer 2 eines Profils eingesetzt und dort befestigt ist. Auf diese Weise kann also ein Profil 1 mit seiner Stirnkante an ein gleichartiges Profil 1 angesetzt und mit diesem dauerhaft aber lösbar verbunden werden.

Ein alternatives Profil ist in dem Querschnitt in Fig. 2 gezeigt, wobei es sich um einen achteckigen Pfosten handelt, bei welchem eine Vielzahl von Nuten gebildet sind, deren hinterschnittene Schenkel mit 6 bezeichnet sind. Derartige Achteckprofile können beispielsweise als Pfosten eingesetzt werden.

Fig. 3, ebenfalls Stand der Technik, zeigt eine herkömmliche Wand. Ein Wandelement 7, beispielsweise eine Pressspanplatte, eine Glasscheibe, eine Hartfaserplatte oder dergleichen, die lackiert oder sonst wie dekoriert sein kann, ist mit einer Längskante 8 in die Nut eines Profils 5 eingesetzt. Die beiden daran angrenzenden Seitenkanten 9 sind in die Nuten 3 jeweils eines Profils 1 eingesetzt. In die Hohlkammern 2 der Profile 1 sind Klemmverbinder eingesetzt, die dann die Nut 6 des Profils 5 hintergreifend mit diesen verbunden werden. Wie die Verbindungsstelle 11 zeigt, sind dabei die Profile 1 praktisch so lang wie die Seitenkanten 9, während das Profil 5 um eine Länge gegenüber der Kante 8 verlängert ist, so dass die Verbinder 1 mit dem Profil 5 verbunden werden können. Es ist offensichtlich, dass die Kante 10 freisteht. Diese würde nunmehr dem Anschluss an die nächste Wand dienen können oder zwischen die Profile 1 könnte ein weiteres Kantenprofil 1 entlang der Kante 10 langgesetzt werden, beispielsweise ebenfalls das Pfostenelement der benachbarten Wand.

Es versteht sich von selbst, dass anstelle des Profils 5 an dieser Stelle auch ein weiteres Profil 1 als Pfosten eingesetzt und mit den Riegeln 1 an den Querkanten 9 verbunden werden kann. Dieser aus dem Stand der Technik bekannten Wände werden vor Ort montiert.

Vom Ablauf her werden also die erforderlichen Pfostenelemente und Riegelelemente vorgefertigt. Die notwendige Anzahl von Verbindern wird bereitgelegt und die notwendige Anzahl von Wandbauplatten wird bereitgelegt. Alle diese Elemente werden separat transportiert. Vor Ort wird dann Wand für Wand aufgebaut. Es zeigt sich, dass damit sehr viel Arbeit vor Ort aufgewandt werden muss. Darüber hinaus sind die Kanten der Wandelemente gefährdet. Das ständige Aufbauen und natürlich nach Abschluss einer Messe beispielsweise erforderliche Wiederabbauen und Transportieren in Einzelteilen ist weder für die Profilelemente noch die Verbinder noch für die Wandbauplatten vorteilhaft. Die Elemente unterliegen einem erheblichen Verschleiß und sind erheblichen Beschädigungsgefahren ausgesetzt.

Ausgehend vom vorbeschriebenen Stand der Technik liegt der Erfindung die Aufgabe zugrunde, ein Wandbausystem der beschriebenen Art dahingehend zu verbessern, dass ein größerer Grat an Vorfertigungsmöglichkeiten gegeben ist und eine Beschädigung der einzelnen Elemente sowie ein häufiges Zerlegen und Zusammenbauen vermieden werden. Darüber hinaus soll ein Kantenprofilelement zur Verbesserung entsprechender Wandbauelemente bereitgestellt werden. Schließlich schlägt die Erfindung ein verbessertes Wandbauplattenelement vor.

Die technische Lösung dieser Aufgabe ergibt sich für die Kantenprofilelementanordnung aus Anspruch 1. Für das Wandbauplattenelement ergibt sich die technische Lösung für ein Element mit den Merkmalen des Anspruches 6. Für das Wandbausystem ergibt sich die Lösung für ein System mit den Merkmalen gemäß Anspruch 8. Für die Verwendung ergibt sich die Lösung durch die Verwendung gemäß Anspruch 9. Weitere Vorteile und Merkmale ergeben sich jeweils aus den Unteransprüchen.

Mit der Erfindung wird vorgeschlagen, ein Kantenprofilelement einzusetzen, welches einerseits eine Nut aufweist, die zur Aufnahme der einer freien Kante eines Plattenelementes dient. Dem gegenüberliegend wird ein Federelement ausgebildet.

Dieses Federelement kann Nuten entsprechender Pfosten- oder Riegel-Profile eingesetzt werden. Darüber hinaus hat das Kantenprofilelement einen Bereich zur Verbindung mit einem weiteren Profilelement.

Gemäß der Erfindung ist der Verbindungsbereich durch ein Hohlprofil gebildet, in welches ein auch als Verbindungselement zu bezeichnender Verbinder, beispielsweise ein Klemmverbinder einsetzbar ist. Dieser kann dann in entsprechend beschriebener Weise mit einem Pfosten- oder Riegel-Element verbunden werden, in dem ein pilzartiger Kopf in eine hinterschnittene Nut eingreift.

Das erfindungsgemäße Kantenprofilelement zusammen mit dem Verbindungselement ermöglicht es, zunächst einmal einen vollständigen Rahmen aus Profilelementen zu bilden, also Pfosten-, Riegelelemente und das Kantenprofilelement stellen die vier Kanten eines geschlossenen Rechtecks dar. Zum inneren weisen umlaufend vier Nuten von den Pfosten- und Riegelelementen sowie den Kantenprofilelement. Diese Nuten dienen der Aufnahme einer Wandbauplatte. Da die Elemente, also die Pfosten-, Riegel- und Kantenprofilelemente miteinander verbindbar sind, entsteht auf diese Weise ein vorgefertigtes Wandbauplattenelement. Ein derartiges vorgefertigtes Wandbauplattenelement kann in seiner Gesamtheit transportiert werden, so dass die Wandbauplatte im Kantenbereich nicht mehr Beschädigungen unterliegt. Weiterhin kann das einmal gefertigte Wandbauplattenelement immer wiederverwendet werden, ohne dass es ständig zusammengebaut und zerlegt werden muss. Darüber hinaus können gleiche Wandbauplattenelemente vor Ort auf einfachste Weise miteinander verbunden werden. Dabei können die Riegelelemente des einen Wandbauplattenelementes mit ihren freien Stirnkanten mittels entsprechender Klemmverbinder mit dem Pfostenelement des nächsten Wandbauplattenelementes verbunden werden. Da das Kantenprofilelement eine Feder aufweist, setzt sich diese automatisch in die Nut des Pfostenelementes ein. Auf diese Weise können sehr schnell vorgefertigte Wandbauplattenelemente zu einer ganzen Wand zusammengebaut werden. Sogar ein Übereinanderbau ist ohne weiteres möglich. Im Eckbereich können dann unter Verwendung entsprechender Eckprofile oder Mehrfachprofile - wie beispielsweise das in Fig. 2 gezeigte - schnell Wandbauplattenelemente über die Ecke gebaut werden. Auf diese Weise lassen sich sehr leicht und sehr schnell Räume erzeugen.

Mittels des erfindungsgemäßen Kantenprofilelementes zusammen mit dem Verbindungselement lassen sich neue und erfindungsgemäße Wandbauplattenelemente herstellen, die in ihrer Gesamtheit zu einem System für den Wandaufbau verwendbar sind. Die besonderen Vorteile ergeben sich aus der Möglichkeit der vollständigen Vorfertigung von Wandbauplattenelementen und der Vermeidung von wiederholter Montage und Demontage sowie der Vermeidung von Beschädigungen der einzelnen Elemente. Neben dem Materialvorteil ergeben sich insbesondere erhebliche Zeitvorteile, denn ein Messeaufbau kann praktisch vollständig vorgefertigt werden und braucht vor Ort nur noch zusammengestellt werden.

Gemäß einem ergänzenden Aspekt ist das Kantenprofilelement aus Aluminium gebildet.

Gemäß einem ergänzenden oder alternativen Aspekt sind die Nutseitenwände an der Innenseite geraut ausgebildet. Gemäß einem ergänzenden oder alternativen Aspekt ist die Rauheit durch in Strangrichtung längs verlaufende Klinken ausgebildet.

Gemäß einem ergänzenden oder alternativen Aspekt ist in das Hohlprofil ein Verbinder einsetzbar, der als Klemmverbinder mit einem eine Nut eines angesetzten Profilelementes hintergreifenden Kopf ausgebildet ist.

Gemäß einem ergänzenden oder alternativen Aspekt betrifft die Erfindung ein Wandbauplattenelement bestehend aus einer flächigen Wandbauplatte, die an Kanten mit mittels Verbindern verbundenen Hohlprofilen besetzt ist und an wenigstens einer Kante ein zuvor beschriebenes Kantenprofilelement aufweist.

Gemäß einem ergänzenden oder alternativen Aspekt betrifft die Erfindung ein Wandbauplattenelement, bei welchem das Kantenprofilelement auf die Kante aufgeklemmt ist.

Gemäß einem ergänzenden oder alternativen Aspekt betrifft die Erfindung ein Wandbausystem mit Profilelementen, welche Hohlprofilbereiche zur Aufnahme von Verbindungselementen und an äußeren Oberflächen verlaufende Nuten aufweisen, wobei gleichartige Profile miteinander verbindbar sind, in denen einen ein Hohlprofil eingesetzter Verbinder die Nutkanten eines gleichartigen Nutprofils hintergreifend die aneinandergesetzten Nutprofile miteinander verbindet und wobei Wandbauplatten als Ausfachelemente in aus Nutprofilen gebildete Rahmen einsetzbar sind, in denen die Plattenkanten in Profilnuten eingesetzt werden, dadurch gekennzeichnet, dass entlang einer Kante ein zuvor beschriebenes Kantenprofilelement angeordnet ist.

Weitere Vorteile und Merkmale ergeben sich aus der folgenden Beschreibung anhand der Figuren. Dabei zeigen:
- Fig. 1: eine Schnittdarstellung durch ein Hohlprofilelement (Stand der Technik);
- Fig. 2: eine Schnittdarstellung durch ein weiteres Profilelement (Stand der Technik);
- Fig. 3: eine schematische Darstellung eines Wandbauelementes nach dem Stand der Technik;
- Fig. 4: eine Schnittdarstellung durch eine Ausführungsform eines Kantenprofilelementes;
- Fig. 5: eine schematische Darstellung eines Wandbauplattenelementes unter Verwendung des erfindungsgemäßen Kantenprofilelementes und
- Fig. 6: eine schematische Draufsicht auf ein erfindungsgemäßes Wandbauplattenelement.

Ein erfindungsgemäßes Kantenprofilelement 15 weist eine Nut 16 und gegenüberliegend eine Feder 17 auf. Die Nut 16 ist im gezeigten Ausführungsbeispiel in Längsrichtung mit Zähnen oder Klinken versehen. Auf diese Weise kann das Kantenprofilelement 15 auf die Seitenkante einer Wandbauplatte aufgesteckt werden. Im gezeigten Ausführungsbeispiel weist das Profil eine zwischen Nut 16 und Feder 17 liegende Hohlkammer 18 auf, die der Aufnahme eines Klemmverbinders dient. Der Klemmverbinder kann dann wiederum mit seinem pilzartigen Kopf in die Nut 3 eines Profils 1 eingesetzt werden, um mit diesem verbunden zu werden.

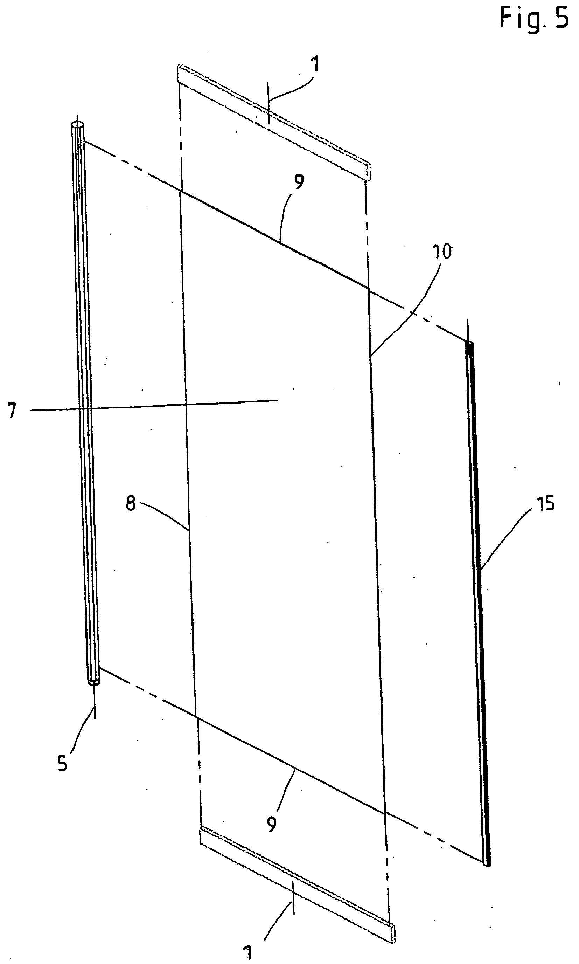

Fig. 5 zeigt ein Ausführungsbeispiel für den Aufbau eines Wandbauplattenelementes nach der Erfindung. Die Wandbauplatte 7 ist, wie bereits in Fig. 3 zum Stand der Technik beschrieben, mit einem Pfostenelement 5 und damit fest verbundenen Riegelelementen 1 aus Profilelementen verbunden, die die Seitenkanten 8 und 9 abdecken. Auf die Seitenkante 10 ist in erfindungsgemäßer Weise ein Kantenprofilelement 15 aufgesteckt und an den beiden Stirnkanten mit den Profilelementen 1 verbinden. Auf diese Weise entsteht ein vorgefertigtes, transportierbares Wandbauplattenelement. Mit einer Vielzahl solcher Wandbauplattenelemente können ohne weiteres ganze Räume in schnellster Montagezeit gefertigt werden. Da die Wandbauplattenelemente vorfertigbar sind, vergeht vergleichsweise wenig Zeit beim Aufbau. Darüber hinaus müssen die einzelnen Elemente nicht mehr demontiert werden, sondern können in ihrer Gesamtheit transportiert werden. Auf diese Weise werden weder die Wandbauplatten 7 im Flächen- und/oder insbesondere Kantenbereich beschädigt noch werden die Profilelemente durch falsche Handhabung beschädigt oder die Verbinder ermüden durch häufiges Öffnen und Schließen.

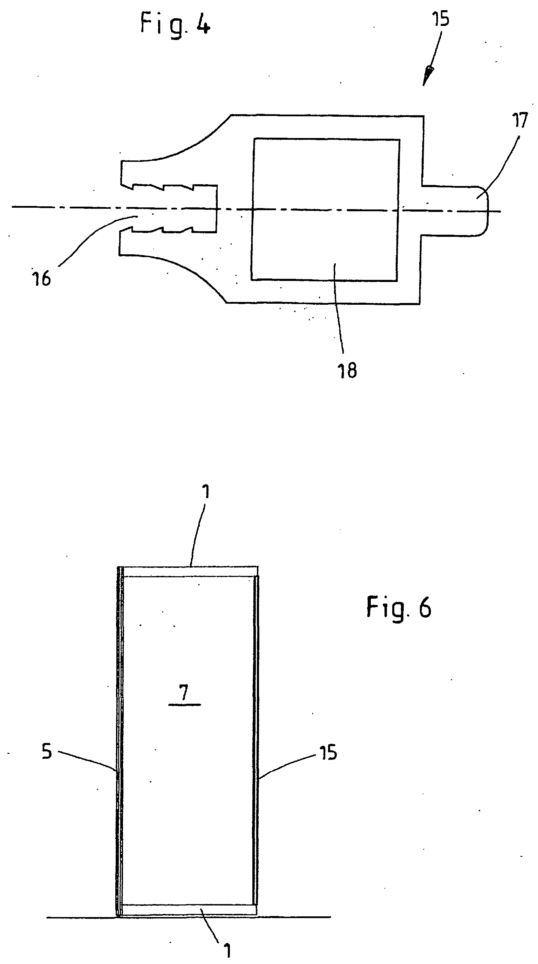

Es ergibt sich dann ein Wandbauplattenelement wie es im Zusammenbau in Fig. 6 gezeigt ist. Dieses kann dann ohne weiteres mit gleichartigen Wandbauplattenelementen verbunden werden. Dabei versteht es sich von selbst, dass anstelle des Pfostenelements 5 auch ein Element 1 eingesetzt werden kann, wenn es sich um ebene Wandbereiche handelt, so dass entsprechende Mehrfachnutelemente nur im Eckbereich eingesetzt werden müssen. Auch können natürlich Eckprofile eingesetzt werden und dergleichen.

Die beschriebenen Ausführungsbeispiele dienen nur der Erläuterung und sind nicht beschränkend.

### Bezugszeichenliste

- 1: Hohlprofil
- 2: Hohlkammer
- 3: Nut
- 4: Schenkel
- 5: Profil
- 6: Nutschenkel
- 7: Wandbauplatte
- 8: Seitenkanten
- 9: Seitenkanten
- 10: Seitenkanten
- 11: Eckbereich
- 15: Kantenprofilelement
- 16: Nut
- 17: Feder
- 18: Hohlkammer

## Patentansprüche

1. Kantenprofilelementanordnung für Wandbauplatten (7), aufweisend ein Kantenprofilelement (15) für Wandbauplatten (7) und ein Verbindungselement, wobei das Kantenprofilelement (15) gebildet ist durch einen Profilstrang mit in Strangrichtung einerseits verlaufend einer Nut (16) zur Aufnahme einer Kante (10) einer Wandbauplatte (7) sowie an der der Nut (16) gegenüberliegenden Oberfläche einem Federelement (17) zum Einsetzen in eine Nut eines entsprechenden Pfosten- (5) oder Riegelprofils (1), wobei zwischen Nut (16) und Federelement (17) des Kantenprofilelements (15) ein Befestigungsbereich ausgebildet ist, welcher zur Verbindung mit anderen Profilelementen (1) als ein Hohlprofil (18) zum stirnseitigen Einsetzen des Verbindungselements ausgebildet ist, so dass ein Kopf des in das Hohlprofil (18) eingesetzten Verbindungselements eine Nut eines stirnseitig an das Kantenprofilelement (15) angesetzten Profilelementes (1) hintergreifen kann.

2. Kantenprofilelementanordnung nach Anspruch 1, **dadurch gekennzeichnet, dass** das Kantenprofilelement (1) aus Aluminium gebildet ist.

3. Kantenprofilelementanordnung nach einem der vorhergehenden Ansprüche, **dadurch gekennzeichnet, dass** die Nutseitenwände des Kantenprofilelements (1) an der Innenseite geraut ausgebildet sind.

4. Kantenprofilelementanordnung nach Anspruch 3, **dadurch gekennzeichnet, dass** die Rauheit durch in Strangrichtung längs verlaufende Klinken ausgebildet ist.

5. Kantenprofilelementanordnung nach einem der vorhergehenden Ansprüche, **dadurch gekennzeichnet, dass** das Verbindungselement als Klemmverbinder ausgebildet ist.

6. Wandbauplattenelement bestehend aus einer flächigen Wandbauplatte (7), die an ihren Kanten (8, 9, 10) mit mittels Verbindern verbundenen Hohlprofilen besetzt ist und an wenigstens einer Kante eine Kantenprofilelementanordnung nach wenigstens einem der Ansprüche 1 bis 4 aufweist, wobei das Verbindungselement der Kantenprofilelementanordnung in dem Hohlprofil (18) des Kantenprofilelements (1) aufgenommen ist und mit einer Nut eines anderen Profilelements verbunden ist.

7. Wandbauplattenelement nach dem vorhergehenden Anspruch, **dadurch gekennzeichnet, dass** das Kantenprofilelement (1) auf die Kante der Bauplatte aufgeklemmt ist.

8. Wandbausystem mit Profilelementen (1, 5, 15), welche Hohlprofilbereiche zur Aufnahme von Verbindungselementen und an äußeren Oberflächen verlaufende Nuten aufweisen, wobei gleichartige Profilelemente (1, 5, 15) miteinander verbindbar sind, in denen ein in ein Hohlprofil eingesetztes Verbindungselement die Nutkanten eines gleichartigen Nutprofils hintergreifend die aneinandergesetzten Nutprofile miteinander verbindet und wobei Wandbauplatten (7) als Ausfachelemente in aus Nutprofilen gebildete Rahmen einsetzbar sind, in denen die Plattenkanten (8, 9, 10) in Profilnuten eingesetzt werden, **dadurch gekennzeichnet, dass** entlang einer Plattenkante eine Kantenprofilelementanordnung gemäß wenigstens einem der Ansprüche 1 bis 4 angeordnet ist, wobei das Verbindungselement der Kantenprofilelementanordnung in dem Hohlprofil (18) des Kantenprofilelements (1) aufgenommen ist und mit einer Nut eines anderen Profilelements verbunden ist.

9. Verwendung eines Kantenprofilelements (15) zur Bildung eines vollständigen Rahmens aus Profilelementen für eine Wandbauplatte (7), wobei das Kantenprofilelement gebildet ist durch einen Profilstrang mit in Strangrichtung einerseits verlaufend einer Nut (16) zur Aufnahme einer Kante der Wandbauplatte (7) sowie an der der Nut gegenüberliegenden Oberfläche einem Federprofil (17), wobei zwischen Nut und Federprofil ein Befestigungsbereich ausgebildet ist, welcher zur Verbindung mit anderen Profilelementen als ein Hohlprofil (18) zum stirnseitigen Einsetzen eines Verbindungselements derart ausgebildet ist, dass der Kopf des in das Hohlprofilelement eingesetzten Verbindungselements eine Nut eines stirnseitig an das Kantenprofilelement angesetzten Profilelements (1) hintergreifen kann.

10. Verwendung nach Anspruch 9, **dadurch gekennzeichnet, dass** das Kantenprofilelement aus Aluminium gebildet ist.

11. Verwendung nach einem der vorhergehenden Ansprüche 9 bis 10, **dadurch gekennzeichnet, dass** die Nutseitenwände an der Innenseite geraut ausgebildet sind.

12. Verwendung nach dem Anspruch 11, **dadurch gekennzeichnet, dass** die Rauheit durch in Strangrichtung längs verlaufende Klinken ausgebildet ist.

## Claims

1. An edge profile element arrangement for wallboards (7), comprising an edge profile element (15) for wallboards (7) and a connecting element, wherein the edge profile element (15) is formed by a profile strand comprising a groove (16), on the one hand, for receiving an edge (10) of a wallboard (7), which groove extends into the direction of the strand, as well as comprising a spring element (17) on the surface opposite the groove (16) for insertion into a groove of a corresponding post (5) or latch profile (1), wherein a fastening area is formed between the groove (16) and the spring element (17) of the edge profile element (15), which fastening area is designed as a hollow profile (18) for inserting the connecting element on the front side for the connection with other profile elements (1), such that a head of the connecting element inserted into the hollow profile (18) can engage behind a groove of a profile element (1) which is placed adjacent to the front side of the edge profile element (15).

2. An edge profile element arrangement according to claim 1, **characterized in that** the edge profile element (1) is made of aluminum.

3. An edge profile element arrangement according to one of the preceding claims, **characterized in that** the inner sides of the groove side walls of the edge profile element (1) are roughened.

4. An edge profile element arrangement according to claim 3, **characterized in that** the roughness is formed by catches which extend longitudinally in the direction of the strand.

5. An edge profile element arrangement according to one of the preceding claims, **characterized in that** the connecting element is designed as a clamp connector.

6. A wallboard element composed of a flat wallboard (7) which is equipped with hollow profiles on the edges (8, 9, 10) thereof, which hollow profiles are connected by means of connectors, and which comprises an edge profile element arrangement according to one of the claims 1 through 4 on at least one edge, wherein the connecting element of the edge profile element arrangement is received in the hollow profile (18) of the edge profile element (1) and is connected to a groove of another profile element.

7. A wallboard element according to the preceding claim, **characterized in that** the edge profile element (1) is clamped onto the edge of the wallboard.

8. A wall construction system comprising profile elements (1, 5, 15) which comprise hollow profile sections for receiving connecting elements and grooves extending on outer surfaces, wherein profile elements (1, 5, 15) of the same kind can be connected to each other, in which a connecting element, which has been inserted into a hollow profile, engages behind the groove edges of a groove profile of the same kind and thus connects the groove profiles placed next to each other, and wherein wallboards (7) can be inserted as filling boards into frames formed by groove profiles, in which frames the board edges (8, 9, 10) are inserted into profile grooves, **characterized in that** an edge profile element arrangement according to at least one of the claims 1 through 4 is placed along one of the board edges, wherein the connecting element of the edge profile element arrangement is received in the hollow profile (18) of the edge profile element (1) and is connected to a groove of another profile element.

9. A utilization of an edge profile element (15) for forming a complete frame from profile elements for a wallboard (7), wherein the edge profile element is formed by a profile strand comprising a groove (16), on the one hand, for receiving an edge of a wallboard (7), which groove extends into the direction of the strand, as well as comprising a spring profile (17) on the surface opposite the groove (16), wherein a fastening area is formed between the groove and the spring profile, which fastening area is designed as a hollow profile (18) for inserting a connecting element on the front side for the connection with other profile elements, such that the head of the connecting element inserted into the hollow profile element can engage behind a groove of a profile element (1) which is placed adjacent to the front side of the edge profile element.

10. A utilization according to claim 9, **characterized in that** the edge profile element is made of aluminum.

11. A utilization according to one of the preceding claims 9 through 10, **characterized in that** the inner sides of the groove side walls are roughened.

12. A utilization according to claim 11, **characterized in that** the roughness is formed by catches which extend longitudinally in the direction of the strand.

## Revendications

1. Arrangement d'élément profilé de bord pour des panneaux de paroi (7), comprenant un élément profilé de bord (15) pour des panneaux de paroi (7) et un élément de liaison, l'élément profilé de bord (15) étant formé par un cordon profilé comprenant, d'une part, une rainure (16) destinée à recevoir un bord (10) d'un panneau de paroi (7) et s'étendant dans la direction du cordon ainsi qu'un élément de ressort (17) disposé sur la surface opposée à la rainure (16) et destiné à être inséré dans une rainure d'un profilé de montant (5) ou de traverse (1) correspondant, une zone de fixation étant formée entre la rainure (16) et l'élément de ressort (17) de l'élément profilé de bord (15), laquelle zone de fixation étant configurée comme un profilé creux (18) pour l'insertion de l'élément de liaison sur la face frontale pour la liaison avec d'autres éléments profilés (1), de sorte qu'une tête de l'élément de liaison inséré dans le profilé creux (18) peut s'engager derrière une rainure d'un élément profilé (1) disposé adjacent à la face frontale de l'élément profilé de bord (15).

2. Arrangement d'élément profilé de bord selon la revendication 1, **caractérisé en ce que** l'élément profilé de bord (1) est fabriqué en aluminium.

3. Arrangement d'élément profilé de bord selon l'une des revendications précédentes, **caractérisé en ce que** les faces intérieures des parois latérales de rainure de l'élément profilé de bord (1) sont rendues rugueuses.

4. Arrangement d'élément profilé de bord selon la revendication 3, **caractérisé en ce que** la rugosité est obtenue par des cliquets s'étendant longitudinalement dans la direction du cordon.

5. Arrangement d'élément profilé de bord selon l'une des revendications précédentes, **caractérisé en ce que** l'élément de liaison est configuré comme un raccord de serrage.

6. Elément de panneau de paroi composé d'un panneau de paroi plat (7), dont les bords (8, 9, 10) sont munis de profilés creux reliés par moyen des connecteurs, et qui comprend un arrangement d'élément profilé de bord selon l'une des revendications 1 à 4 sur au moins un bord, l'élément de liaison de l'arrangement d'élément profilé de bord étant reçu dans le profilé creux (18) de l'élément profilé de bord (1) et relié à une rainure d'un autre élément profilé.

7. Elément de panneau de paroi selon la revendication précédente, **caractérisé en ce que** l'élément profilé de bord (1) est pincé sur le bord du panneau de paroi.

8. Système de construction de parois comprenant des éléments profilés (1, 5, 15), qui comprennent des zones de profilé creux pour recevoir des éléments de liaison et des rainures s'étendant sur des surfaces extérieures, des éléments profilés (1, 5, 15) ) du même type pouvant être reliés les uns aux autres, dans lesquels un élément de liaison inséré dans un profilé creux s'engage derrière les bords de rainure d'un profilé à rainure du même type et relie ainsi les profilés à rainure juxtaposés l'un à l'autre et des panneaux de paroi (7) pouvant être insérés comme des panneaux de remplissage dans des cadres formés par des profilés à rainure, dans lesquels cadres les bords de panneau (8, 9, 10) sont insérés dans des rainures profilées, **caractérisé en ce qu'**un arrangement d'élément profilé de bord selon au moins une des revendications 1 à 4 est disposé le long d'un bord de panneau, l'élément de liaison de l'arrangement d'élément profilé de bord étant reçu dans le profilé creux (18) de l'élément profilé de bord (1) et relié à une rainure d'un autre élément profilé.

9. Utilisation d'un élément profilé de bord (15) pour former un cadre complet à partir des éléments profilés, le cadre étant destiné à un panneau de paroi (7), l'élément profilé de bord étant formé par un cordon profilé comprenant, d'une part, une rainure (16) destinée à recevoir un bord du panneau de paroi (7) et s'étendant dans la direction du cordon ainsi qu'un profilé de ressort (17) disposé sur la surface opposée à la rainure, une zone de fixation étant formée comme un profilé creux (18) pour l'insertion de l'élément de liaison sur la face frontale pour la liaison avec d'autres éléments profilés, de sorte qu'une tête de l'élément de liaison inséré dans l'élément de profilé creux (18) peut s'engager derrière une rainure d'un élément profilé (1) disposé adjacent à la face frontale de l'élément profilé de bord.

10. Utilisation selon la revendication 9, **caractérisée en ce que** l'élément profilé de bord est fabriqué en aluminium.

11. Utilisation selon l'une des revendications précédentes 9 à 10, **caractérisée en ce que** les faces intérieures des parois latérales de rainure sont rendues rugueuses.

12. Utilisation selon la revendication 11, **caractérisée en ce que** la rugosité est obtenue par des cliquets s'étendant longitudinalement dans la direction du cordon.
